# EUROPÄISCHE PATENTSCHRIFT

(11) **EP 3 191 343 B1**
(45) Veröffentlichungstag und Bekanntmachung des Hinweises auf die Patenterteilung: **29.09.2021**
(21) Anmeldenummer: 15734358.3
(22) Anmeldetag: 06.07.2015
(51) Int. Cl.: B60Q 1/00

(54) **KRAFTFAHRZEUGKAMERA**
MOTOR VEHICLE CAMERA
CAMÉRA DE VÉHICULE AUTOMOBILE

(30) Priorität: 08.09.2014 DE 102014217864
(43) Veröffentlichungstag der Anmeldung: 19.07.2017
(73) Patentinhaber: Volkswagen Aktiengesellschaft, 38440 Wolfsburg (DE)
(72) Erfinder: HANSEN, Ralf, 38165 Lehre (DE)
(86) Internationale Anmeldenummer: PCT/EP2015/065288
(87) Internationale Veröffentlichungsnummer: WO 2016/037725

(56) Entgegenhaltungen:
- EP-A1- 1 951 549
- DE-A1- 10 347 635
- DE-A1-102006 023 103
- DE-U1-202012 004 671
- US-A1- 2005 093 684

## Beschreibung

Die Erfindung betrifft eine Kraftfahrzeugkamera mit den Merkmalen vom Oberbegriff des Patentanspruchs 1.

Kraftfahrzeugkameras sind aus dem allgemeinen Stand der Technik seit Längerem bekannt. Sie sind aus modernen Kraftfahrzeugen zur Unterstützung von Fahrerassistenzsystemen nicht mehr wegzudenken. Beispielsweise werden Kraftfahrzeugkameras zur Unterstützung von automatischen Abstandsüberwachungs-systemen (ACC = Adaptive Cruise Control), zur Unterstützung von Sicherheitssystemen (Pre-Crash Systeme oder Spurhalteassistenten) oder auch zur Unterstützung von Einparkhilfen genutzt. Die eingesetzten Kameras können dabei im sichtbaren oder auch im nicht sichtbaren Lichtspektrum arbeiten, beispielsweise in Form von Infrarotkameras.

Sehr verbreitet ist der Einsatz von Rückfahrkameras, welche im Heckbereich eines Kraftfahrzeugs, beispielsweise oberhalb einer heckseitigen Stoßfängerverkleidung im Bereich eines Schlossträgers verbaut sein können.

Beim Einlegen des Rückwärtsgangs wird die Rückfahrkamera durch ein Steuergerät angesteuert, so dass dem Fahrer unter Zwischenschaltung einer entsprechenden Bildverarbeitungseinheit die Kamera- bzw. Fahrzeugumgebung im Heckbereich auf einer Anzeigeeinheit im Fahrzeuginneren angezeigt werden kann.
Gleichzeitig wird zumeist auch ein Rückfahrscheinwerfer aktiviert, welcher zur Ausleuchtung der Fahrzeugumgebung im Heckbereich dienen soll.

Allerdings hat sich gezeigt, dass trotz eines solchen Rückfahrscheinwerfers die Ausleuchtung des Umgebungsbereichs der Kamera zumeist ungenügend ist.

Die DE 103 47 635 A1 beschreibt einen Scheinwerfer für ein Kraftfahrzeug. Das Scheinwerfergehäuse ist horizontal in einen oberen, mit einer Haube verbundenen Teil und einen unteren, mit einem Chassis verbundenen Teil geteilt. Im oberen Gehäuseteil sind Leuchtmittel für Abblendlicht, Blinklicht und Tagfahrlicht sowie auch eine Kamera aufgenommen. Im unteren Gehäuseteil sind ein Leuchtmittel für Fernlicht sowie ein Lasermodul untergebracht. Die Kamera ist horizontal neben dem Abblendlicht angeordnet. Das Licht der Leuchtmittel tritt in bekannter Weise über die Scheinwerfergehäuse abdeckende Lichtscheiben in Fahrtrichtung aus den Scheinwerfergehäusen aus.

Aus der EP 1 951 549 B1 sind Scheinwerfermodule eines Fahrzeugs mit Halbleiterlichtquellen bekannt. Im Gehäuse eines jeden Scheinwerfermoduls ist ein Kamera aufgenommen. Licht der Halbleiterlichtquellen durchtritt in üblicher Weise Lichtscheiben der Gehäuse, wird so nach außen in Fahrtrichtung geworfen und bildet Lichtkegel aus. Es wird vorgeschlagen, jeweils eine zusätzliche Lichtquelle in den Scheinwerfermodulen anzuordnen, die dem maximalen Empfindlichkeitsbereich der Kameras angepasst sind. Die Kameras können mit der Abstrahlrichtung der Lichtkegel mitgeschwenkt werden.

In der DE 20 2012 004 671 U1 wird eine Fahrzeugkarosserie mit einer Blinkleuchte beschrieben, in deren Gehäuse neben einer Lichtquelle auch eine Kamera aufgenommen ist. Das Gehäuse umschließt die Kamera und weist eine Lichtscheibe auf, hinter der die Kamera geschützt positioniert ist. Über eine Stelleinrichtung lässt sich die Kamera in horizontaler Richtung verschwenken, wobei die Stelleinrichtung über eine Steuereinheit mit den Signalen eines Lenkwinkelsensors versorgt wird.

Die DE 10 2006 023 103 A1 offenbart eine Kamera, die über eine Halterung hinter einem als Emblem ausgebildeten Deckel einer Öffnung einer Fahrzeugwand gehaltert ist. Die Kamera kann von einer Ruhestellung in eine Arbeitsstellung verfahren werden.
Aus der DE 10 2011 000 358 A1 wird ferner eine Rückfahrkamera eines Kraftfahrzeugs beschrieben. Als Leuchtmittel zur Ausleuchtung der Kameraumgebung ist eine LED (Licht emittierende Diode) vorhanden, welche Teil einer Kennzeichenbeleuchtung ist.

Um ein Flimmern des Kamerabildes zu vermeiden, wird die LED bei einem eingelegten Rückwärtsgang bzw. bei eingeschalteter Rückfahrkamera mit einem Strom einer ersten Frequenz und bei einem eingelegten Vorwärtsgang bzw. bei ausgeschalteter Rückfahrkamera mit einem Strom einer zweiten, niedrigeren Frequenz angesteuert.

Schließlich wird in der nächstkommenden US 2005/0093684 A1 eine Halterung für ein heckseitiges Kennzeichenschild beschrieben. Die Halterung umfasst einen Basisrahmen und eine rahmenartige, vorzugsweise transparente Abdeckung, welche mit dem Basisrahmen verbunden wird. In einem oberen, horizontalen Segment des Basisrahmens sind auf einer Platine Leuchtmittel angeordnet, die Licht durch ein Fenster der Abdeckung abstrahlen und so zusätzliches Licht für eine Rückfahrkamera erzeugen. Die Rückfahrkamera ist rechts von den Leuchtmitteln angeordnet. Im Bereich der Leuchtmittel sind auf der gleichen Platine weitere Leuchtmittel angeordnet, deren Licht nach unten, auf das Kennzeichenschild gerichtet ist.

Der Erfindung liegt die Aufgabe zu Grunde, eine gattungsgemäße Kraftfahrzeugkamera mit den Merkmalen vom Oberbegriff des Patentanspruchs 1 derart zu verbessern, dass bei guter Ausleuchtung der Kameraumgebung eine kompakte Lösung zur Verfügung gestellt werden kann.

Diese Aufgabe wird mit den Merkmalen von Patentanspruch 1 gelöst. Vorteilhafte Ausbildungen beziehungsweise Weiterbildungen der Erfindung sind den Unteransprüchen entnehmbar.

Die Erfindung geht aus von einer Kraftfahrzeugkamera, welche zumindest teilweise in einem Gehäuse gehalten ist, welches an oder in einem Kraftfahrzeug installiert ist. Es ist wenigstens ein Leuchtmittel zur Ausleuchtung zumindest eines Teilbereichs der Kameraumgebung vorhanden.

Als ein Merkmal der Erfindung wird vorgeschlagen, dass das Gehäuse zumindest teilweise lichtleitend ausgebildet ist und wenigstens ein Leuchtmittel derart positioniert ist, dass damit Licht in den lichtleitenden Teil einkoppelbar und in Richtung des auszuleuchtenden Teilbereichs der Kameraumgebung auskoppelbar ist.

Auf diese Weise kann die Ausleuchtung der näheren Kameraumgebung deutlich verbessert werden. Dem Gehäuse, in dem die Kamera gehalten ist, wird eine Doppelfunktion (Kamerahalterung, Lichtfunktion) zugewiesen. Auf diese Weise kann zusätzlich eine sehr kompakte Lösung bereitgestellt werden. Dies ist insbesondere bei heutzutage äußerst beengten Bauraumverhältnissen sehr vorteilhaft.

Insbesondere wird durch die erfindungsgemäße Lösung die Ausleuchtung des Nahfeldes der Kamera, also beispielsweise im Bereich direkt hinter der Stoßfängerverkleidung (bei fahrzeugheckseitiger Kameramontage) bzw. vor der Stoßfängerverkleidung (bei Kameramontage im Frontbereich) verbessert.

Nach einer ersten Weiterbildung der Erfindung kann das Gehäuse einen rahmenartigen Aufnahmebereich für die Kamera ausbilden. In Betriebsstellung der Kamera ist der Aufnahmebereich in eine obere und eine untere Rahmenhälfte unterteilbar. Das wenigstens eine Leuchtmittel ist in der oberen Rahmenhälfte angeordnet.

Eine solche Ausgestaltung bietet insbesondere dann Vorteile, wenn die Kamera in Betriebsstellung sich im unmittelbaren Bereich einer Öffnungskante der Fahrzeugaußenhaut befindet.

Dabei ist es insbesondere zweckmäßig, wenn als Leuchtmittel mehrere LEDs vorhanden sind, welche sich zumindest über einen Großteil der oberen Rahmenhälfte erstrecken. Hierdurch kann ein nur beschränkt zur Verfügung stehender Platz optimal ausgenutzt werden.

Um einen optimalen Schutz der Kamera zu gewährleisten, wird gemäß einer weiteren Ausbildung des Erfindungsgedankens vorgeschlagen, dass das Gehäuse hinter einer schwenkbaren Abdeckung angeordnet ist und die Kamera unter Verschwenken der Abdeckung entweder in eine Aufnahmestellung oder in eine Ruhestellung bringbar ist.

Die Abdeckung kann beispielsweise als Markenemblem ausgebildet sein. Ein Solches ist üblicherweise derart zentral positioniert, dass eine Anordnung einer Kamera in dessen Bereich zu einer guten Erfassung und auch zu einer guten Ausleuchtung der näheren Kameraumgebung beiträgt.

Ein Schutz der Kamera kann noch weiter erhöht werden, wenn zwischen der schwenkbaren Abdeckung und dem Gehäuse eine weitere schwenkbare Abdeckung angeordnet ist.

Zwar weisen heutige Kraftfahrzeugkameras einen sehr breiten Erfassungswinkel auf, dennoch kann es in bestimmten Situationen durchaus vorteilhaft sein, wenn die Kamera zusätzlich um eine vertikale und/oder horizontale Achse schwenkbar ist.

Bevorzugte Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
- Fig. 1: ein Kraftfahrzeug mit erfindungsgemäßen Kraftfahrzeugkameras von oben,
- Fig. 2: eine Rückfahrkamera im Heckbereich eines Kraftfahrzeugs gemäß Schnittverlauf II aus Fig. 1,
- Fig. 3: eine Darstellung der Kraftfahrzeugkamera aus Ansicht III gemäß Fig. 2,
- Fig. 4: eine weitere Ausführungsform einer Kraftfahrzeugkamera im Heckbereich eines Kraftfahrzeugs gemäß einem Schnittverlauf analog zum Schnittverlauf II aus Fig. 1 und
- Fig. 5: noch eine weitere Ausführungsform einer Kraftfahrzeugkamera im Heckbereich ebenfalls gemäß einem Schnittverlauf analog zum Schnittverlauf II aus Fig. 1.

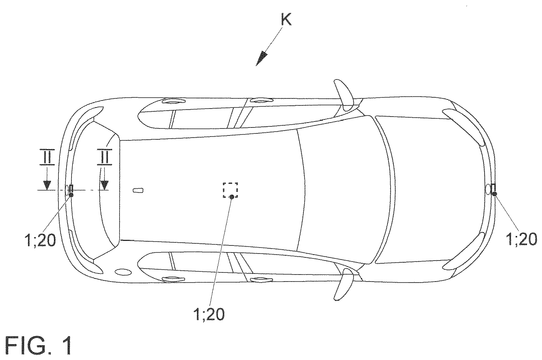

Zunächst wird auf die Fig. 1 Bezug genommen. Darin ist ein Kraftfahrzeug K von oben ersichtlich.

Das Kraftfahrzeug K ist mit mehreren, nicht näher dargestellten Fahrerassistenzsystemen ausgestattet. Unter anderem sind eine Einparkhilfe, ein Spurhalteassistent, ein automatisches Abstandsregelsystem sowie eine Innenraum- Überwachung vorhanden.

Zur Unterstützung dieser Fahrerassistenzsysteme ist das Kraftfahrzeug K im Heckbereich, im Frontbereich und im Bereich des Dachhimmels jeweils mit einer erfindungsgemäßen Kraftfahrzeugkamera 1, welche in einem Gehäuse 20 gehalten ist, ausgestattet.

Die Kraftfahrzeugkameras 1 sind jeweils fest, jedoch lösbar mit dem Gehäuse 20 verbunden und integraler Bestandteil des Kraftfahrzeugs K.

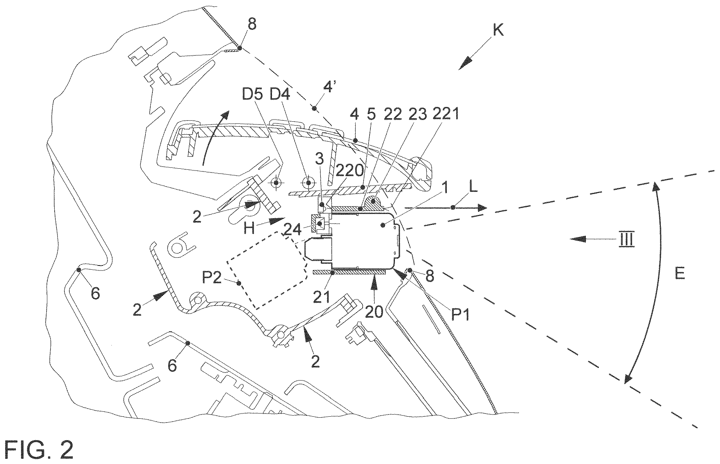

In Fig. 2 ist nunmehr beispielhaft die im Heckbereich des Kraftfahrzeugs K installierte Kraftfahrzeugkamera 1 näher dargestellt.

Die Kraftfahrzeugkamera 1 ist in einem Hohlraum H einer heckseitigen Fahrzeugstruktur 6 aufgenommen. Der Hohlraum H weist eine in etwa kreisrunde Öffnung auf, welche durch eine umlaufende Öffnungskante 8 begrenzt wird.

Innerhalb des Hohlraums H ist ein Gehäuse 2 ersichtlich, welches zur beweglichen Aufnahme des Gehäuses 20 dient.

Wie bereits erwähnt, ermöglicht das Gehäuse 20 eine lösbare Halterung der Kraftfahrzeugkamera 1. Konkret ist die Kraftfahrzeugkamera 1 über eine Schraubverbindung 24 mit einer Rückseite des Gehäuses 20 verschraubt. Selbstverständlich sind außer der Schraubverbindung 24 auch andere lösbare Verbindungen, beispielsweise Rastverbindungen, denkbar.

Die Kraftfahrzeugkamera 1 befindet sich in der Darstellung in einer ausgefahrenen Betriebsstellung P1, in der die Kraftfahrzeugkamera 1 einen Erfassungsbereich E aufweist.

In diese Betriebsstellung P1 wird die Kraftfahrzeugkamera 1 über einen nicht näher dargestellten Bewegungsmechanismus im Gehäuse 2 nach Einlegen des Rückwärtsgangs gebracht.

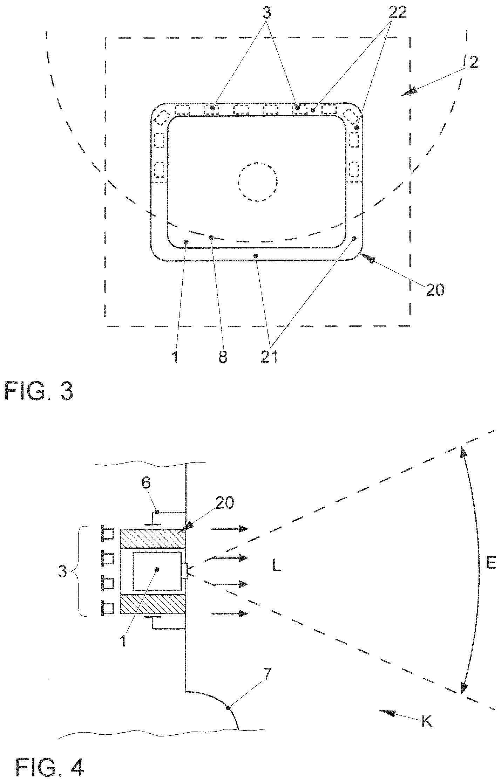

In Fig. 3 wird das Gehäuse 20 aus der in Fig. 2 dargestellten Blickrichtung III betrachtet. Aus Fig. 3 ist ersichtlich, dass das Gehäuse 20 rahmenartig ausgebildet ist und eine obere Rahmenhälfte 22 und eine untere Rahmenhälfte 21 aufweist.

Die obere Rahmenhälfte 22 ist lichtleitend ausgebildet. Sie ist konkret aus farblosen, transparenten Kunststoff hergestellt und weist eine Lichteinkoppelfläche 220 und eine Lichtauskoppelfläche 221 auf.

Sowohl die Lichteinkoppelfläche 220 als auch die Lichtauskoppelfläche 221 erstrecken sich stirnseitig entlang der oberen Rahmenhälfte 22.

Unmittelbar der Lichteinkoppelfläche 220 benachbart, sind mehrere Leuchtmittel 3 angeordnet. Die Leuchtmittel 3 sind vorzugsweise als LEDs (Licht emittierende Dioden) ausgebildet.

Von den Leuchtmitteln 3 emittierte Lichtstrahlen L werden in die Lichteinkoppelfläche 220 eingekoppelt und aus der Lichtauskoppelfläche 221 in Richtung des Erfassungsbereichs E der Kraftfahrzeugkamera 1 wieder ausgekoppelt.

In der dargestellten Betriebsstellung P1 stößt das Gehäuse 20 mit einem nasenartigen Vorsprung 23 gegen eine plattenartige, innere Abdeckung 5, wodurch diese über einen Drehpunkt D5 nach oben geschwenkt wird.

Gleichzeitig führt dies auch zu einem Verschwenken einer äußeren Abdeckung 4 um einen Drehpunkt D4. Die äußere Abdeckung 4 ist gleichzeitig als Markenemblem ausgebildet.

Bei Verlassen des Rückwärtsgangs wird der erwähnte und nicht näher dargestellte Bewegungsmechanismus im Gehäuse 2 derart angesteuert, dass das Gehäuse 20 mit der Kraftfahrzeugkamera 1 wieder zurück zu einer Ruheposition P2 bewegt wird, in der die Kraftfahrzeugkamera 1 sowohl von der inneren Abdeckung 5 als auch von der äußeren Abdeckung 4 abgedeckt ist.

Anhand von Fig. 4 ist ein weiteres Ausführungsbeispiel ersichtlich, bei dem die Kraftfahrzeugkamera 1 in einem Gehäuse 20 gehalten ist, welches fest in einer heckseitigen Fahrzeugstruktur 6 eines Kraftfahrzeugs K, oberhalb einer Stoßfängerverkleidung 7 verbaut ist.

Im Unterschied zum ersten Ausführungsbeispiel, ist das Gehäuse 20 komplett lichtleitend ausgebildet. Bei einer Betrachtung des Gehäuses 20 analog der Blickrichtung III aus Fig. 2 ist das Gehäuse 20 ebenfalls rahmenartig ausgebildet. Vorzugsweise als LEDs ausgebildete Leuchtmittel 3 sind daher rahmenartig entlang einer entsprechenden Lichteinkoppelfläche angeordnet, so dass auch hier Lichtstrahlen L über eine entsprechende Lichtauskoppelfläche in den Erfassungsbereich E der Kraftfahrzeugkamera 1 gelangen können.

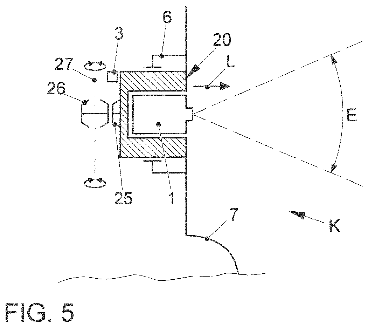

Schließlich ist in Fig. 5 noch ein weiteres Ausführungsbeispiel dargestellt. Bei diesem ist das die Kraftfahrzeugkamera 1 aufnehmende Gehäuse 20 schwenkbar mit einer heckseitigen Fahrzeugstruktur 6 verbunden. Auch hierbei ist das Gehäuse 20 in einer Betrachtung des Gehäuses 20 analog der Blickrichtung III aus Fig. 2 rahmenartig ausgebildet.

Konkret weist das Gehäuse 20 rückseitig ein Zahnsegment 25 auf, welches mit einem Ritzel 26 in Wirkverbindung steht. Das Ritzel 26 (und damit das Gehäuse 20) kann über einen nicht näher dargestellten Antrieb um eine vertikale Drehachse 27 in beide Drehrichtungen angetrieben werden.

Der Antrieb ist in nicht näher dargestellter Weise signaltechnisch derart mit dem Betriebszustand des Kraftfahrzeugs K verbunden, dass eine Drehung des Ritzels 26 in Abhängigkeit eines Lenkrad-Lenkwinkels nur dann erfolgt, wenn ein Rückwärtsgang eingelegt ist.

Abweichend bzw. ergänzend zum Ausführungsbeispiel ist auch denkbar, dass das Gehäuse 20 (und damit die Kraftfahrzeugkamera 1) um eine quer zur Fahrzeuglängsachse ausgerichtete, horizontale Achse schwenkbar ist.

### Bezugszeichenliste

- 1: Kamera
- 2: Gehäuse
- 20: rahmenartiges Gehäuse zur Aufnahme der Kamera
- 21: untere Rahmenhälfte
- 22: obere Rahmenhälfte
- 220: Lichteinkoppelfläche
- 221: Lichtauskoppelfläche
- 23: nasenartiger Vorsprung
- 24: Schraubverbindung
- 25: Zahnsegment
- 26: Ritzel
- 27: Drehachse
- 3: Leuchtmittel
- 4: äußere Abdeckung
- 5: innere Abdeckung
- 6: Fahrzeugstruktur
- 7: Stoßfängerverkleidung
- 8: Öffnungskante

- D4: Drehpunkt
- D5: Drehpunkt
- E: Erfassungsbereich
- H: Hohlraum
- K: Kraftfahrzeug
- L: Lichtstrahlen
- P1: Betriebsstellung
- P2: Ruhestellung

## Patentansprüche

1. Kraftfahrzeugkamera (1), welche zumindest teilweise in einem Gehäuse (20) gehalten ist, welches an oder in einem Kraftfahrzeug (K) installierbar ist, wobei wenigstens ein Leuchtmittel (3) zur Ausleuchtung (L) zumindest eines Teilbereichs (E) der Kameraumgebung vorhanden ist, **dadurch gekennzeichnet, dass** das Gehäuse (20) zumindest teilweise lichtleitend ausgebildet ist und wenigstens ein Leuchtmittel (3) derartvor einer stirnseitigen Lichteinkoppelfläche (220) des Gehäuses (20) positioniert ist, dass damit Licht (L) in den lichtleitenden Teil des Gehäuses (20) einkoppelbar und aus einer stirnseitigen Lichtauskoppelfläche (221) des Gehäuses (20) in Richtung des auszuleuchtenden Teilbereichs (E) der Kameraumgebung auskoppelbar ist.

2. Kraftfahrzeugkamera (1) nach Anspruch 1, **dadurch gekennzeichnet, dass** das Gehäuse (20) einen rahmenartigen Aufnahmebereich für die Kamera (1) ausbildet, wobei in Betriebsstellung (P1) der Kamera (1) der Aufnahmebereich in eine obere (22) und eine untere (21) Rahmenhälfte unterteilbar ist und das wenigstens eine Leuchtmittel (3) in der oberen Rahmenhälfte (22) angeordnet ist.

3. Kraftfahrzeugkamera (1) nach Anspruch 2, **dadurch gekennzeichnet, dass** als Leuchtmittel (3) mehrere LEDs vorhanden sind, welche sich zumindest über einen Großteil der oberen Rahmenhälfte (22) erstrecken.

4. Kraftfahrzeugkamera (1) nach einem der vorhergehenden Ansprüche, **dadurch gekennzeichnet, dass** das Gehäuse (20) hinter einer schwenkbaren Abdeckung (4) angeordnet ist und die Kamera (1) unter Verschwenken der Abdeckung (4) entweder in eine Aufnahmestellung (P1) oder in eine Ruhestellung (P2) bringbar ist.

5. Kraftfahrzeugkamera (1) nach Anspruch 4, **dadurch gekennzeichnet, dass** zwischen der schwenkbaren Abdeckung (4) und dem Gehäuse (20) eine weitere, schwenkbare Abdeckung (5) angeordnet ist.

6. Kraftfahrzeugkamera (1) nach einem der vorhergehenden Ansprüche, **dadurch gekennzeichnet, dass** die Kamera (1) um eine vertikale (27) und/oder horizontale Achse schwenkbar ist.

## Claims

1. Motor vehicle camera (1), which is held at least partially in a housing (20) that is able to be mounted at or in a motor vehicle (K), wherein at least one light-emitting means (3) for fully illuminating (L) at least one partial region (E) of the camera surroundings is present, **characterized in that** the housing (20) is embodied to be at least partially light-guiding and at least one light-emitting means (3) is positioned upstream of an end-side light incoupling surface (220) of the housing (20) such that light (L) is thereby able to be coupled into the light-guiding part of the housing (20) and is able to be coupled out of an end-side light outcoupling surface (221) of the housing (20) in the direction of the partial region (E) of the camera surroundings that is to be fully illuminated.

2. Motor vehicle camera (1) according to Claim 1, **characterized in that** the housing (20) forms a frame-type receiving region for the camera (1), wherein, in the operating position (P1) of the camera (1), the receiving region is divisible into a top frame half (22) and a bottom frame half (21) and the at least one light-emitting means (3) is arranged in the top frame half (22) .

3. Motor vehicle camera (1) according to Claim 2, **characterized in that** a plurality of LEDs that extend at least over the majority of the top frame half (22) are present as the light-emitting means (3).

4. Motor vehicle camera (1) according to one of the preceding claims, **characterized in that** the housing (20) is arranged behind a pivotable cover (4) and the camera (1) is able to be brought either into a recording position (P1) or into a rest position (P2) by pivoting the cover (4) .

5. Motor vehicle camera (1) according to Claim 4, **characterized in that** a further pivotable cover (5) is arranged between the pivotable cover (4) and the housing (20) .

6. Motor vehicle camera (1) according to one of the preceding claims, **characterized in that** the camera (1) is pivotable about a vertical axis (27) and/or a horizontal axis.

## Revendications

1. Caméra de véhicule automobile (1), laquelle est maintenue au moins partiellement dans un boîtier (20), lequel peut être installé sur ou dans un véhicule automobile (K), dans laquelle au moins un moyen d'éclairage (3) est présent pour l'éclairage (L) d'au moins une zone partielle (E) de l'environnement de caméra, **caractérisée en ce que** le boîtier (20) est réalisé comme au moins partiellement conducteur de lumière et au moins un moyen d'éclairage (3) est positionné devant une surface frontale d'entrée de lumière (220) du boîtier (20) de telle sorte que la lumière (L) peut entrer dans la partie conductrice de lumière du boîtier (20) et peut sortir d'une surface frontale de sortie de lumière (221) du boîtier (20) dans la direction de la zone partielle (E) de l'environnement de caméra à éclairer.

2. Caméra de véhicule automobile (1) selon la revendication 1, **caractérisée en ce que** le boîtier (20) réalise une zone de logement de type cadre pour la caméra (1), dans laquelle dans une position de fonctionnement (P1) de la caméra (1) la zone de logement peut être divisée en une moitié de cadre supérieure (22) et une inférieure (21) et l'au moins un moyen d'éclairage (3) est disposé dans la moitié de cadre supérieure (22).

3. Caméra de véhicule automobile (1) selon la revendication 2, **caractérisée en ce que** plusieurs LED sont prévues en tant que moyens d'éclairage (3), lesquelles s'étendent sur au moins une grande partie de la moitié de cadre supérieure (22).

4. Caméra de véhicule automobile (1) selon l'une des revendications précédentes, **caractérisée en ce que** le boîtier (20) est disposé derrière un couvercle pivotant (4) et la caméra (1) peut être amenée soit dans une position d'enregistrement (P1) soit dans une position de repos (P2) par pivotement du couvercle (4).

5. Caméra de véhicule automobile (1) selon la revendication 4, **caractérisée en ce qu'**un couvercle pivotant supplémentaire (5) est disposé entre le couvercle pivotant (4) et le boîtier (20).

6. Caméra de véhicule automobile (1) selon l'une des revendications précédentes, **caractérisée en ce que** la caméra (1) est pivotante autour d'un axe vertical (27) et/ou horizontal.
